# EUROPEAN PATENT APPLICATION

(11) **EP 3 699 457 A1**
(43) Date of publication of application: **26.08.2020**
(21) Application number: 20157026.4
(22) Date of filing: 12.02.2020
(51) Int. Cl.: F16H 45/02

(54) **TORQUE CONVERTER**

(30) Priority: 22.02.2019 JP 2019030499
(71) Applicant: Exedy Corporation, Neyagawa-shi, Osaka 572-8570 (JP)
(72) Inventor: YASUDA, Keiichi, Osaka, 572-8570 (JP)
(74) Representative: KASTEL Patentanwälte PartG mbB

(57) **Abstract**

It is intended to provide a torque converter in which an output shaft is enabled to have a larger outer diameter than a stationary shaft. The present torque converter (100) includes a front cover (2), a first torque converter body (3) and a second torque converter body (4). The first torque converter body (3) includes a first impeller (31), a first turbine (32) and a first stator (33). The first impeller (31) is unitarily rotated with the front cover (2). The first turbine (32) is disposed on a second side of the first impeller (31) in an axial direction. The second torque converter body (4) includes a second impeller (41), a second turbine (42) and a second stator (43). The second impeller (41) is disposed on the second side of the first turbine (32) in the axial direction. The second impeller (41) is unitarily rotated with the first turbine (32). The second turbine (42) is disposed on the second side of the second impeller (41) in the axial direction.

## Description

### BACKGROUND OF THE INVENTION

### 1. Field of the Invention

The present invention relates to a torque converter.

### 2. Description of the Related Art

Torque converters include a front cover, an impeller, a turbine and a stator (see Japan Laid-open Patent Application Publication No. 2017-207091). The front cover is disposed on an engine side, whereas the impeller is disposed on a transmission side. The turbine is disposed between the front cover and the impeller. The stator is disposed between the turbine and the impeller. The stator is supported by a stationary shaft through a one-way clutch. An output shaft, provided for outputting a torque to the transmission, is spline-coupled to the turbine. The output shaft extends toward the transmission, while passing through the interior of the stationary shaft.

The aforementioned type of torque converter is configured based on the premise that a torque, transmitted from the engine, is outputted therethrough to the transmission. Because of this, the output shaft, extending from the torque converter, is required to pass through the interior of the stationary shaft, and is designed to have a smaller outer diameter than the stationary shaft. However, electric cars, part of hybrid cars and so forth do not need the transmission. Hence in such cars, the output shaft, extending from the torque converter, is not required to pass through the interior of the stationary shaft. Because of this, the output shaft, extending from the torque converter, preferably has a larger outer diameter than the stationary shaft.

### SUMMARY OF THE INVENTION

It is an object of the present invention to provide a torque converter in which an output shaft is enabled to have a larger outer diameter than a stationary shaft. This object is achieved by a torque converter according to claim 1. Advantageous embodiments are subject-matter of the dependent claims.

A torque converter according to a first aspect of the present invention is connected to a motor, and outputs a torque inputted thereto from a first side in an axial direction to a second side in the axial direction. The torque converter includes a front cover, an impeller, a turbine and a stator. The front cover is a member to which the torque is inputted. The impeller is unitarily rotated with the front cover. The turbine is disposed on the second side of the first impeller in the axial direction. The stator is disposed between the first impeller and the first turbine.

According to this configuration, the turbine, from which the torque is finally outputted, is disposed on the second side of the stator in the axial direction. Because of this, an output shaft, which is attached to the turbine, can be disposed radially outside a stationary shaft that supports the stator. In other words, the stationary shaft is configured to extend through the interior of the output shaft. Therefore, the output shaft can be enlarged in outer diameter than the stationary shaft.

A torque converter according to a second aspect of the present invention is connected to a motor, and outputs a torque inputted thereto from a first side in an axial direction to a second side in the axial direction. The torque converter includes a front cover, a first torque converter body and a second torque converter body. The front cover is a member to which the torque is inputted. The first torque converter body includes a first impeller, a first turbine and a first stator. The first impeller is unitarily rotated with the front cover. The first turbine is disposed on the second side of the first impeller in the axial direction. The first stator is disposed between the first impeller and the first turbine. The second torque converter body includes a second impeller, a second turbine and a second stator. The second impeller is disposed on the second side of the first turbine in the axial direction. The second impeller is unitarily rotated with the first turbine. The second turbine is disposed on the second side of the second impeller in the axial direction. The second stator is disposed between the second impeller and the second turbine.

According to this configuration, the second turbine, from which the torque is finally outputted, is disposed on the second side of the first stator and the second stator in the axial direction. Because of this, an output shaft, which is attached to the second turbine, can be disposed radially outside a stationary shaft that supports the first and second stators. In other words, the stationary shaft is configured to extend through the interior of the output shaft. Therefore, the output shaft can be enlarged in outer diameter than the stationary shaft.

Moreover, the aforementioned torque converter can output the torque transmitted thereto from the motor by causing the first torque converter body to amplify the torque, and thereafter, by further causing the second torque converter body to amplify the torque as well. Because of this, the torque converter configured as described above has as good a torque amplifying function as possible.

Preferably, the torque converter further includes a rear cover and a lock-up device. The rear cover is unitarily rotated with the front cover, and is disposed on the second side of the turbine or the second turbine. The lock-up device is disposed between the rear cover and the turbine or the second turbine, respectively.

Preferably, the first stator and the second stator are rotatably supported in common by a stationary shaft.

Preferably, the first turbine and the second impeller are rotatably supported by the stationary shaft.

Preferably, the second torque converter body has a larger torus radius than the first torque converter body.

Preferably, a turbine shell of the first turbine and an impeller shell of the second impeller are provided as a single member.

Overall, according to the present invention, it is possible to provide a torque converter in which an output shaft is enabled to have a larger diameter than a stationary shaft.

### BRIEF DESCRIPTION OF THE DRAWINGS

FIG. 1 is a cross-sectional view of a torque converter.
FIG. 2 is a cross-sectional view of a torque converter according to a modification.

### DETAILED DESCRIPTION OF THE PREFERRED EMBODIMENTS

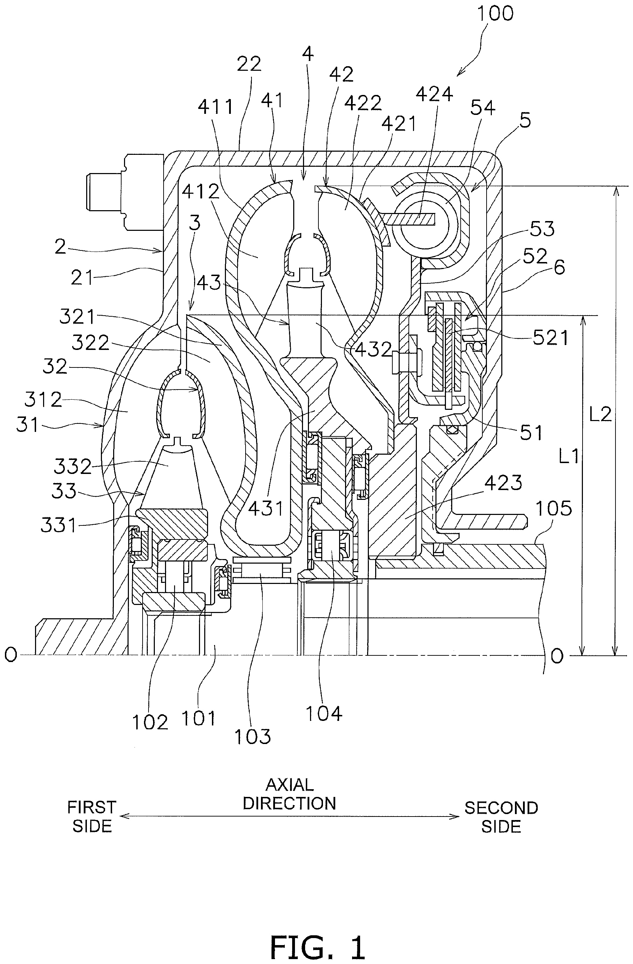

A preferred embodiment of a torque converter according to the present invention will be hereinafter explained with reference to drawings. It should be noted that in the following explanation, the term "axial direction" means an extending direction of a rotational axis O of a torque converter 100. On the other hand, the term "radial direction" means a radial direction of an imaginary circle about the rotational axis O, whereas the term "circumferential direction" means a circumferential direction of the imaginary circle about the rotational axis O. It should be noted that a motor is disposed on the left side in FIG. 1 whereas a reducer is disposed on the right side in FIG. 1, although the motor and the reducer are not shown in FIG. 1.

### [Entire Configuration]

As shown in FIG. 1, the torque converter 100 is rotatable about the rotational axis O. The torque converter 100 is a device to which a torque is inputted from a first side in the axial direction (a left side in FIG. 1), and from which the torque is outputted to a second side in the axial direction (a right side in FIG. 1). The torque converter 100 is a device to which a torque, transmitted from the motor, is inputted. The torque converter 100 includes a front cover 2, a first torque converter body 3, a second torque converter body 4, a lock-up device 5 and a rear cover 6.

### [Front Cover 2]

The front cover 2 is a component to which the torque, transmitted from the motor, is inputted. The front cover 2 includes a disc portion 21 and a cylindrical portion 22. The cylindrical portion 22 extends from an outer peripheral end of the disc portion 21 to the second side in the axial direction.

### [First Torque Converter Body 3]

The first torque converter body 3 includes a first impeller 31, a first turbine 32 and a first stator 33.

The first impeller 31 is unitarily rotated with the front cover 2. In the present preferred embodiment, the front cover 2 and the first impeller 31 are integrated. Because of this, the torque, inputted to the front cover 2, is inputted to the first impeller 31. The first impeller 31 includes a first impeller shell and a plurality of first impeller blades 312.

The first impeller shell is formed by part of the front cover 2. In other words, the front cover 2 also functions as the first impeller 31. It should be noted that the first impeller shell may be a discrete member separated from the front cover 2, and may be fixed to the front cover 2. The first impeller blades 312 are fixed to the inner lateral surface of the front cover 2.

The first turbine 32 is disposed in opposition to the first impeller 31. The first turbine 32 is disposed on the second side of the first impeller 31 in the axial direction. The first turbine 32 is rotatably supported by a stationary shaft 101. Detailedly, the first turbine 32 is supported by the stationary shaft 101 through a bearing member 103. It should be noted not only the first turbine 32 but also the first stator 33 and a second stator 43 are rotatably supported by the stationary shaft 101.

The first turbine 32 includes a first turbine shell 321 and a plurality of first turbine blades 322. The first turbine blades 322 is fixed to the inner lateral surface of the first turbine shell 321 by brazing or so forth. The first turbine blades 322 extend from the first turbine shell 321 to the first side in the axial direction.

The first stator 33 is configured to regulate the flow of hydraulic oil returning from the first turbine 32 to the first impeller 31. The first stator 33 is rotatable about the rotational axis O. Detailedly, the first stator 33 is supported by the stationary shaft 101 through a first one-way clutch 102. The first stator 33 is disposed axially between the first impeller 31 and the first turbine 32.

The first stator 33 includes a first stator carrier 331 having a disc shape and a plurality of first stator blades 332 attached to the outer peripheral surface of the first stator carrier 331.

### [Second Torque Converter Body]

The second torque converter body 4 is disposed on the second side of the first torque converter body 3 in the axial direction. The second torque converter body 4 is disposed radially outside the first torque converter body 3. It should be noted that as seen in the axial direction, the second torque converter body 4 overlaps in part with the first torque converter body 3.

The second torque converter body 4 includes a second impeller 41, a second turbine 42 and the second stator 43.

The second impeller 41, the second turbine 42 and the second stator 43, which compose the second torque converter body 4, are greater in radius than the first impeller 31, the first turbine 32 and the first stator 33, which compose the first torque converter body 3, respectively.

A torus radius L2 of the second torque converter body 4 is greater than a torus radius L1 of the first torque converter body 3. It should be noted that the outer radius of each turbine shell can be measured as the torus radius.

The second impeller 41 is coupled to the first turbine 32. Because of this, the second impeller 41 is unitarily rotated with the first turbine 32. The second impeller 41 is rotatably supported by the stationary shaft 101. Detailedly, the second impeller 41 is supported by the stationary shaft 101 through the bearing member 103. The second impeller 41 includes a second impeller shell 411 and a plurality of second impeller blades 412.

The second impeller shell 411 is configured to be unitarily rotated with the first turbine shell 321 of the first turbine 32. For example, the second impeller shell 411 is integrated with the first turbine shell 321. The second impeller shell 411 may compose a single member together with the first turbine shell 321, or may be a discrete member separated from the first turbine shell 321.

The second impeller blades 412 are fixed to the inner lateral surface of the second impeller shell 411. The second impeller blades 412 extend from the second impeller shell 411 to the second side in the axial direction. In other words, the second impeller blades 412 axially extend to the opposite side from the first turbine blades 322.

The second turbine 42 is disposed in opposition to the second impeller 41. The second turbine 42 includes a second turbine shell 421, a plurality of second turbine blades 422 and a turbine hub 423. The second turbine blades 422 are fixed to the inner lateral surface of the second turbine shell 421 by brazing or so forth. The second turbine blades 422 extend from the second turbine shell 421 to the first side in the axial direction. In other words, the second turbine blades 422 axially extend to the same side as the first turbine blades 322, but axially extend to the opposite side from the second impeller blades 412.

The turbine hub 423 is fixed to the inner peripheral end of the second turbine shell 421 by rivets, welding or so forth. The turbine hub 423 is provided with a spline hole. This spline hole enables an output shaft 105 to be spline-coupled to the turbine hub 423. The output shaft 105 extends from the turbine hub 423 to the second side in the axial direction. Thus, the position from which the output shaft 105 extends is located axially on the second side of the position from which the stationary shaft 101 extends. Because of this, the output shaft 105 can be disposed radially outside the stationary shaft 101. In other words, the output shaft 105 can be enlarged in outer diameter than the stationary shaft 101. The stationary shaft 101 extends through the interior of the output shaft 105. It should be noted that the inner diameter of the second turbine 42 is greater than that of a second one-way clutch 104. Specifically, the inner diameter of the turbine hub 423 of the second turbine 42 is greater than that of the second one-way clutch 104.

The second stator 43 is configured to regulate the flow of hydraulic oil returning from the second turbine 42 to the second impeller 41. The second stator 43 is rotatable about the rotational axis O. Detailedly, the second stator 43 is supported by the stationary shaft 101 through the second one-way clutch 104. In other words, the second stator 43 is supported together with the first stator 33 by the stationary shaft 101. The second stator 43 is disposed axially between the second impeller 41 and the second turbine 42.

The second stator 43 includes a second stator carrier 431 having a disc shape and a plurality of second stator blades 432 attached to the outer peripheral surface of the second stator carrier 431. The inner end of the second stator 43 and that of the first stator 33 are supported in common by the stationary shaft 101. It should be noted that the inner diameter of the second stator 43 is greater than that of the first stator 33. Detailedly, the inner diameter of the second one-way clutch 104 is greater than that of the first one-way clutch 102. In other words, the outer diameter of the stationary shaft 101 is greater in a part to which the second stator 43 is attached than in a part to which the first stator 33 is attached.

### [Rear Cover]

The rear cover 6 is disposed on the second side of the second turbine 42 in the axial direction. The rear cover 6 is unitarily rotated with the front cover 2. Detailedly, the rear cover 6 composes a housing together with the front cover 2. The rear cover 6 is provided as a discrete member separated from the front cover 2, and is integrated with the front cover 2 by welding or so forth. It should be noted that the rear cover 6 may compose a single member together with the front cover 2. The housing, composed of the rear cover 6 and the front cover 2, accommodates the first torque converter body 3 and the second torque converter body 4.

### [Lock-up Device]

When a lock-up on state is made, the lock-up device 5 is configured to mechanically transmit a torque from the rear cover 6 to the second turbine 42 of the second torque converter body 4. The lock-up device 5 is disposed axially between the rear cover 6 and the second turbine 42. The lock-up device 5 includes a piston 51 and a clutch part 52.

The piston 51 is disposed to be axially movable between the rear cover 6 and the second turbine 42. Detailedly, the piston 51 is disposed to be capable of axially sliding on the outer peripheral surface of the output shaft 105.

When pressed by the piston 51, the clutch part 52 is configured to be engaged by friction. The clutch part 52 includes a plurality of friction members 521. Each friction member 521 has an annular shape. It should be noted that the clutch part 52 may include only one friction member 521.

The lock-up device 5 further includes a drive plate 53 and a damper mechanism 54. The drive plate 53 is coupled to the clutch part 52. When the clutch part 52 is turned to a clutch-on state, a torque is inputted to the drive plate 53 from the rear cover 6. The torque, inputted to the drive plate 53, is inputted to the second turbine 42 through the damper mechanism 54. It should be noted that the second turbine 42 includes an engaging portion 424, and the engaging portion 424 is engaged with the damper mechanism 54.

### [Actions of Torque Converter]

Next, the torque converter 100 configured as described above will be explained.

When the speed ratio of the torque converter 100 is less than a predetermined value, the lock-up device 5 is kept in a lock-up off state. Because of this, a torque transmitted from the front cover 2 is inputted to the first torque converter body 3, and is amplified therein.

Then, the torque amplified in the first torque converter body 3 is inputted to the second torque converter body 4, and is amplified therein. Thus, the torque, amplified in the first torque converter body 3 and the second torque converter body 4, is outputted to the reducer.

When the rotational speed of the second turbine 42 increases and the speed ratio of the torque converter 100 becomes greater than or equal to the predetermined value, the lock-up device 5 is turned to the lock-up on state whereby a directly connected state is made. As a result, the torque transmitted from the front cover 2 is transmitted to the second turbine 42 through the rear cover 6 and the lock-up device 5.

The torque converter 100 configured as described above is applicable to, for instance, an electric car and a hybrid car.

### [Modifications]

One preferred embodiment of the present invention has been explained above. However, the present invention is not limited to this, and a variety of changes can be made without departing from the gist of the present invention.

### Modification 1

In the aforementioned preferred embodiment, the torque converter 100 includes two torque converter bodies composed of the first torque converter body 3 and the second torque converter body 4. However, the torque converter 100 may include only one torque converter body.

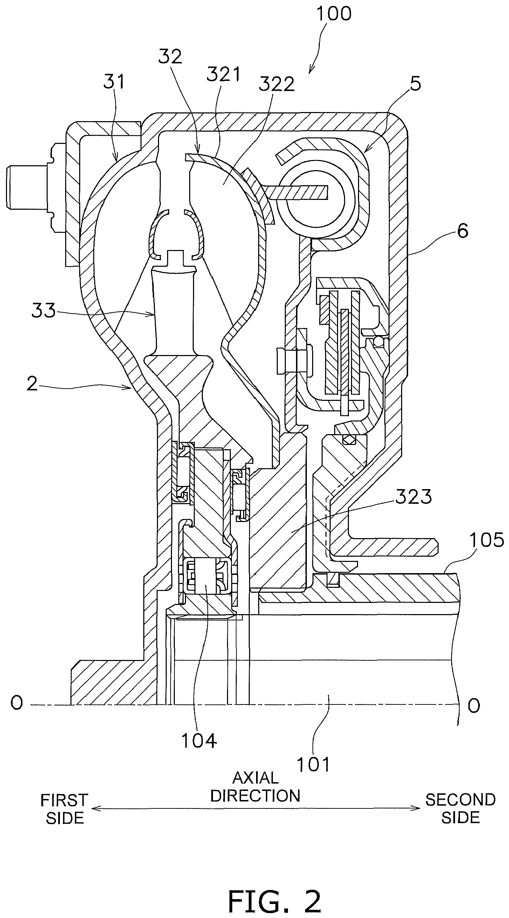

As shown in FIG. 2, the torque converter 100 includes the front cover 2, an impeller 31, a turbine 32, a stator 33, the lock-up device 5 and the rear cover 6.

In the modification 1, the front cover 2, the lock-up device 5 and the rear cover 6 have basically the same configurations as those in the aforementioned preferred embodiment.

The impeller 31 is unitarily rotated with the front cover 2. Similarly to the first impeller 31 in the aforementioned preferred embodiment, the impeller 31 is integrated with the front cover 2.

The turbine 32 is disposed in opposition to the impeller 31. The turbine 32 is disposed on the second side of the impeller 31 in the axial direction. The turbine 32 includes a turbine shell 321, a plurality of turbine blades 322 and a turbine hub 323.

The turbine hub 323 is fixed to the inner peripheral end of the turbine shell 321 by rivets, welding or so forth. The output shaft 105 is spline-coupled to the turbine hub 323. The inner diameter of the turbine 32 is greater than that of a one-way clutch 104. Detailedly, the inner diameter of the turbine hub 322 of the turbine 32 is greater than that of the one-way clutch 104.

The stator 33 is supported by the stationary shaft 101 through the one-way clutch 104. In other words, the stator 33 is rotatably supported by the stationary shaft 101. The stator 33 is disposed axially between the impeller 31 and the turbine 32.

As described above, the position from which the output shaft 105 extends is located axially on the second side of the position from which the stationary shaft 101 extends. Because of this, the output shaft 105 can be disposed radially outside the stationary shaft 101. In other words, the output shaft 105 can be enlarged in outer diameter than the stationary shaft 101. The stationary shaft 101 extends through the interior of the output shaft 105.

### Modification 2

The lock-up device 5 may not include the damper mechanism.

### REFERENCE SIGNS LIST

- 2: Front cover
- 3: First torque converter body
- 31: First impeller
- 32: First turbine
- 33: First stator
- 4: Second torque converter body
- 41: Second impeller
- 42: Second turbine
- 43: Second stator
- 5: Lock-up device
- 6: Rear cover
- 100: Torque converter

## Claims

1. A torque converter connected to a motor, the torque converter outputting a torque inputted thereto from a first side in an axial direction to a second side in the axial direction, the torque converter comprising:
a front cover to which the torque is inputted;
an impeller unitarily rotated with the front cover;
a turbine disposed on the second side of the impeller in the axial direction; and
a stator disposed between the impeller and the turbine.

2. The torque converter according to claim 1, further comprising:
a rear cover unitarily rotated with the front cover, the rear cover disposed on the second side of the turbine; and
a lock-up device disposed between the rear cover and the turbine.

3. A torque converter according to claim 1 or 2, **characterized by**:
a first torque converter body including a first impeller, a first turbine and a first stator, the first impeller unitarily rotated with the front cover, the first turbine disposed on the second side of the first impeller in the axial direction, the first stator disposed between the first impeller and the first turbine; and
a second torque converter body including a second impeller, a second turbine and a second stator, the second impeller disposed on the second side of the first turbine in the axial direction, the second impeller unitarily rotated with the first turbine, the second turbine disposed on the second side of the second impeller in the axial direction, the second stator disposed between the second impeller and the second turbine.

4. The torque converter according to claim 3, wherein the first stator and the second stator are rotatably supported in common by a stationary shaft.

5. The torque converter according to claim 4, wherein the first turbine and the second impeller are rotatably supported by the stationary shaft.

6. The torque converter according to any of claims 3 to 5, wherein the second torque converter body has a larger torus radius than the first torque converter body.

7. The torque converter according to any of claims 3 to 6, wherein a turbine shell of the first turbine and an impeller shell of the second impeller are provided as a single member.
